# FASCICULE DE BREVET EUROPEEN

(11) **EP 3 545 225 B1**
(45) Date de publication et mention de la délivrance du brevet: **26.08.2020**
(21) Numéro de dépôt: 17811655.4
(22) Date de dépôt: 22.11.2017
(51) Int. Cl.: F17C 11/00

(54) **RÉSERVOIR DE STOCKAGE D'HYDROGÈNE SOUS LA FORME D'HYDRURE MÉTALLIQUE OFFRANT UN CONFINEMENT DE LA POUDRE AMÉLIORÉ**
WASSERSTOFFSPEICHER BEINHALTEND METALLHYDRIDE MIT EINER VERBESSERTEN FIXIERUNG DES PULVERS
HYDROGEN STORAGE RESERVOIR WITH METAL HYDRIDS WITH AN IMPROVED CONFINEMENT OF THE POWDER

(30) Priorité: 23.11.2016 FR 1661390
(43) Date de publication de la demande: 02.10.2019
(73) Titulaire: Commissariat à l'énergie atomique et aux énergies alternatives, 75015 Paris (FR)
(72) Inventeur: PORTRA, Thierry, 38470 Vinay (FR); GILLIA, Olivier, 38360 Sassenage (FR)
(74) Mandataire: Brevalex
(86) Numéro de dépôt international: PCT/FR2017/053216
(87) Numéro de publication internationale: WO 2018/096270

(56) Documents cités:
- WO-A1-2016/097309
- WO-A2-2013/087565
- US-A1- 2005 072 786
- US-A1- 2016 327 209

## Description

### DOMAINE TECHNIQUE ET ÉTAT DE LA TECHNIQUE ANTÉRIEURE

La présente invention se rapporte à un réservoir de stockage d'hydrogène sous la forme d'hydrure métallique, offrant un confinement de l'hydrure en poudre amélioré.

On cherche des énergies alternatives aux pétroles du fait, notamment, de la réduction des réserves de pétrole. Un des vecteurs prometteurs pour ces sources d'énergie est l'hydrogène, qui peut être utilisé dans les piles à combustible pour produire de l'électricité.

L'hydrogène est un élément très répandu dans l'univers et sur la Terre, il peut être produit à partir du charbon, du gaz naturel ou d'autres hydrocarbures, mais aussi par simple électrolyse de l'eau en utilisant par exemple l'électricité produite par l'énergie solaire ou éolienne.

Les piles à hydrogène sont déjà utilisées dans certaines applications, par exemple dans des véhicules automobiles mais sont encore peu répandues, notamment du fait des précautions à prendre et des difficultés pour le stockage de l'hydrogène.

L'hydrogène peut être stocké sous forme d'hydrogène dit « solide » sous la forme d'hydrure. Ce stockage autorise une densité volumique de stockage importante et met en œuvre une pression modérée d'hydrogène tout en minimisant l'impact énergétique du stockage sur le rendement global de la chaine hydrogène, i.e. de sa production à sa conversion en une autre énergie, si on arrive par exemple à utiliser la chaleur perdue par la pile pour provoquer sa désorption dans le réservoir d'hydrogène.

Le principe du stockage solide de l'hydrogène sous forme d'hydrure est le suivant : certains matériaux et en particulier certains métaux possèdent la capacité d'absorber l'hydrogène pour former un hydrure, cette réaction est appelée absorption. L'hydrure formé peut à nouveau donner de l'hydrogène gazeux et un métal. Cette réaction est appelée désorption. L'absorption ou la désorption interviennent en fonction de la pression partielle d'hydrogène et la température.

L'absorption et la désorption de l'hydrogène sur une poudre ou une matrice métallique M se font selon la réaction suivante : 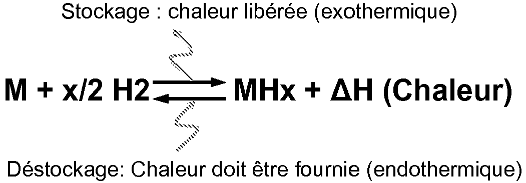
M étant la poudre ou matrice métallique,
MHx étant l'hydrure métallique.

On utilise par exemple une poudre métallique que l'on met en contact avec de l'hydrogène, un phénomène d'absorption apparaît et un hydrure métallique se forme. La libération de l'hydrogène s'effectue selon un mécanisme de désorption.

Le stockage de l'hydrogène est une réaction exothermique, i.e. qui dégage de la chaleur, alors que la libération de l'hydrogène est une réaction endothermique, i.e. qui absorbe de la chaleur.

On cherche notamment à avoir un chargement rapide de la poudre métallique en hydrogène. Pour obtenir un tel chargement rapide, il faut évacuer la chaleur produite lors de ce chargement pour éviter de freiner l'absorption de l'hydrogène sur la poudre ou la matrice métallique. Lors du déchargement en hydrogène, de la chaleur est apportée. Par conséquent, l'efficacité du refroidissement et du réchauffement conditionne les débits de chargement et de déchargement.

De façon quasi-systématique, l'hydrure et le métal, qui se présentent tous deux sous forme de poudre dans les réservoirs, ont une différence de densité comprise entre 10 % à 30 %.

Cette variation de densité au sein du réservoir a deux conséquences :
- d'une part l'apparition de contraintes à l'intérieur des grains de poudre lors des cycles d'absorption-désorption, ce qui provoque leur fractionnement en plus petits grains. Ce phénomène est appelé décrépitation.
- d'autre part le gonflement des grains de poudre au cours de l'absorption d'hydrogène et le dégonflement des grains lors de la désorption. Un volume libre au-dessus de la poudre est alors prévu pour tenir compte de ce gonflement.

Le phénomène de décrépitation et le phénomène de gonflement sont responsables d'une densification progressive du lit de poudre à mesure que le nombre de cycles d'absorption-désorption croît. En effet, la décrépitation fait apparaître des poudres de plus en plus fines qui migrent par gravité vers le fond du réservoir à travers le réseau de grains. De plus, lorsque la vitesse du flux d'hydrogène est suffisamment importante, les grains sont déplacés et réarrangés dans le réservoir. Par ailleurs, le lit de poudre tend à se rétracter, i.e. à voir son volume diminuer lors d'une désorption ce qui laisse un espace vide entre les parois du réservoir et le lit du matériau de stockage de l'hydrogène. Une migration des poudres intervient par gravité via cet espace et le comble. Lors de l'absorption suivante, la poudre d'hydrure formée ne va pas se comporter comme un fluide. En particulier, le niveau du lit de poudre dans le réservoir n'est pas celui atteint lors de l'absorption précédente. En effet les frottements des grains entre eux et contre la paroi du réservoir empêchent le lit de poudre de se dilater librement. Le gonflement des grains de poudre est alors compensé par la réduction de la taille des porosités. Le lit de matériau de stockage de l'hydrogène/d'hydrure se densifie ainsi progressivement au cours des cycles d'hydruration.

On appelle « cycle d'hydruration », une phase d'absorption suivi d'une phase de désorption d'hydrogène.

Il est donc important d'éviter une accumulation de matériau de stockage de l'hydrogène qui pourrait appliquer des contraintes pouvant détériorer la structure du réservoir.

Les documents WO2011/058044 et WO 2011/058053 décrivent des réservoirs de stockage d'hydrogène sous forme solide comportant une enceinte cylindrique de révolution dont l'axe est destiné à être orienté sensiblement horizontalement et comportant une structure de stockage des hydrures. Cette structure comporte une pluralité d'étages s'étendant parallèlement à l'axe de l'enceinte et divisés chacun en une pluralité de cellules contenant l'hydrure. L'étage du dessus fermant les cellules de l'étage du dessous. Les échanges thermiques sont par exemple réalisés par des tubes traversant la structure dans la direction de l'axe longitudinal et dans lesquels circule un caloporteur.

Ces structures assurent un bon confinement de l'hydrure. Néanmoins on cherche à améliorer encore ce confinement. Par ailleurs on cherche de manière additionnelle à améliorer les échanges thermiques entre les hydrures et le circuit de caloporteur. Les documents WO 2016/097309 A1 et WO 2013/087565 A2 décrivent également des réservoirs de stockage d'hydrogène

### EXPOSÉ DE L'INVENTION

C'est par conséquent un but de la présente invention d'offrir un réservoir de stockage d'hydrogène sous forme solide dans lequel le confinement de la poudre est encore amélioré par rapport aux réservoirs de l'état de la technique.

Le but mentionné ci-dessus est atteint par un réservoir de stockage d'hydrogène d'axe longitudinal destiné à être orienté sensiblement horizontalement, comportant une enceinte extérieure et une structure intérieure de stockage de l'hydrure métallique, ladite structure comportant une pluralité d'étages superposés, lesdits étages étant sensiblement parallèles à l'axe longitudinal, chaque étage comportant une pluralité de compartiment destinés à contenir un matériau apte à absorber de l'hydrogène. Le réservoir comporte des échangeurs thermiques. Le réservoir comporte également un dispositif monté autour de la structure de stockage autour de l'axe longitudinal et exerçant un effort de serrage sur la structure et maintenant les étages les uns contre les autres. Le confinement du matériau apte à stocker l'hydrogène est amélioré. Le dispositif assurant le serrage est en outre tel qu'il est perméable à l'hydrogène gazeux et étanche au matériau apte à stocker l'hydrogène pulvérulent. Ainsi il ne perturbe pas le stockage et le déstockage en hydrogène. De plus il participe également au confinement en retenant le matériau pulvérulent qui pourrait encore s'échapper de la structure.

De manière avantageuse, l'application de cet effort de serrage permet d'améliorer les échanges thermiques entre le matériau apte à stocker l'hydrogène et le circuit de caloporteur.

Le dispositif de serrage comporte avantageusement un tissu métallique offrant à la fois une résistance mécanique suffisante pour appliquer un effort de serrage et une perméabilité à l'hydrogène gazeux et une étanchéité au matériau en poudre.

En d'autres termes, on assure un ceinturage de la structure en l'encerclant sur toute sa surface latérale extérieure au moyen d'une toile perméable à l'hydrogène gazeux et étanche à l'hydrure en poudre. Ainsi une compression uniforme de la structure en direction de l'axe longitudinal est assurée. De cette façon, la structure est très peu déformée.

La présente invention a alors pour objet un réservoir destiné au stockage de l'hydrogène par absorption dans un matériau de stockage de l'hydrogène, ledit réservoir ayant un axe longitudinal destiné à être orienté sensiblement horizontalement, et comportant une enceinte extérieure, une structure interne d'axe longitudinal, la structure interne comportant une pluralité d'étages et un système d'échange thermique au sein de la structure interne, chaque étage comportant une pluralité de compartiments destinés à recevoir le matériau de stockage de l'hydrogène. Un dispositif de serrage exerçant un effort de serrage sur la surface extérieure de la structure interne est prévue de sorte à maintenir les étages les uns contre les autres, ledit dispositif de serrage comportant au moins une toile perméable à l'hydrogène gazeux et étanche à une poudre du matériau de stockage de l'hydrogène, ladite toile étant disposée sur au moins une partie de la surface extérieure de la structure interne autour de l'axe longitudinal de sorte à l'envelopper au moins en partie, ledit dispositif de serrage comportant des moyens de maintien pour maintenir la toile serrée autour de la structure interne de sorte qu'elle exerce ledit effort de serrage.

De préférence, la toile est un tissu présentant une taille de maille inférieure à la granulométrie la plus fine de la poudre du matériau de stockage de l'hydrogène. La taille de maille est par exemple inférieure à 1 µm.

Le tissu est un tissu métallique, avantageusement en acier inoxydable.

Dans un exemple avantageux, la toile présente une forme de rectangle comportant deux premiers côtés ayant une première dimension et parallèles entre eux et deux deuxièmes côtés ayant une deuxième dimension et parallèles entre eux, la première dimension étant sensiblement égale à la dimension de la structure interne dans la direction de l'axe longitudinal et la deuxième dimension étant inférieure au périmètre de la structure interne dans un plan orthogonal à l'axe longitudinal, les moyens de maintien tendant à rapprocher les deuxièmes côtés.

Les moyens de maintien comportent par exemple un premier profilé fixé sur l'un des deuxièmes côtés et un deuxième profilé fixé sur l'autre des deuxièmes côtés et des moyens pour solidariser les premier et deuxième profilés de sorte qu'ils exercent une traction sur la toile.

Dans un exemple de réalisation, les moyens de solidarisation peuvent comporter au moins une vis montée dans un premier alésage du premier profilé, ladite vis étant montée libre en translation dans ledit premier alésage et coopérant avec un taraudage formé dans le deuxième profilé ou avec un écrou disposé à l'opposé du premier profilé par rapport au deuxième profilé. Les moyens de solidarisation peuvent aussi comporter une pluralité de vis montées dans des premiers alésages du premier profilé, montées libres en translation dans lesdits premiers alésages répartis dans la direction de l'axe longitudinal et coopérant chacune avec un taraudage formé dans le deuxième profilé ou avec un écrou disposé à l'opposé du premier profilé par rapport au deuxième profilé.

Dans un autre exemple de réalisation, les moyens de maintien comportent au moins une agrafe, avantageusement plusieurs agrafes, chevauchant les premier et deuxième profilés.

La présente invention a également pour objet un réservoir de stockage d'hydrogène comportant un réservoir selon l'invention et du matériau de stockage d'hydrogène disposé dans les compartiments.

### BRÈVE DESCRIPTION DES DESSINS

La présente invention sera mieux comprise sur la base de la description qui va suivre et des dessins en annexe sur lesquels :
- la figure 1 est une vue partiellement arrachée d'un exemple de réalisation d'un réservoir selon l'invention,
- la figure 2 est vue en partie éclatée d'une structure interne similaire à la structure interne du réservoir de la figure 1,
- les figures 3 à 6 sont des vues en perspectives d'éléments composant la structure interne,
- la figure 7 est une vue en perspective de la structure interne et du dispositif de serrage monté autour de la structure interne,
- la figure 8 est une vue à partir d'une extrémité longitudinale de la structure interne et du dispositif de serrage de la figure 7 sans les collecteurs et distributeurs d'hydrogène et/ou de caloporteur,
- la figure 9 est une vue du dispositif de serrage seul dans un état de serrage,
- la figure 10 est une vue du dispositif de serrage disposé à plat dans un étant non monté,
- la figure 11 est une vue à partir d'une extrémité longitudinale de la structure interne et d'un dispositif de serrage selon un autre exemple de réalisation,
- la figure 12 est une vue de détail d'un autre exemple de moyens de solidarisation des profilés.

### EXPOSÉ DÉTAILLÉ DE MODES DE RÉALISATION PARTICULIERS

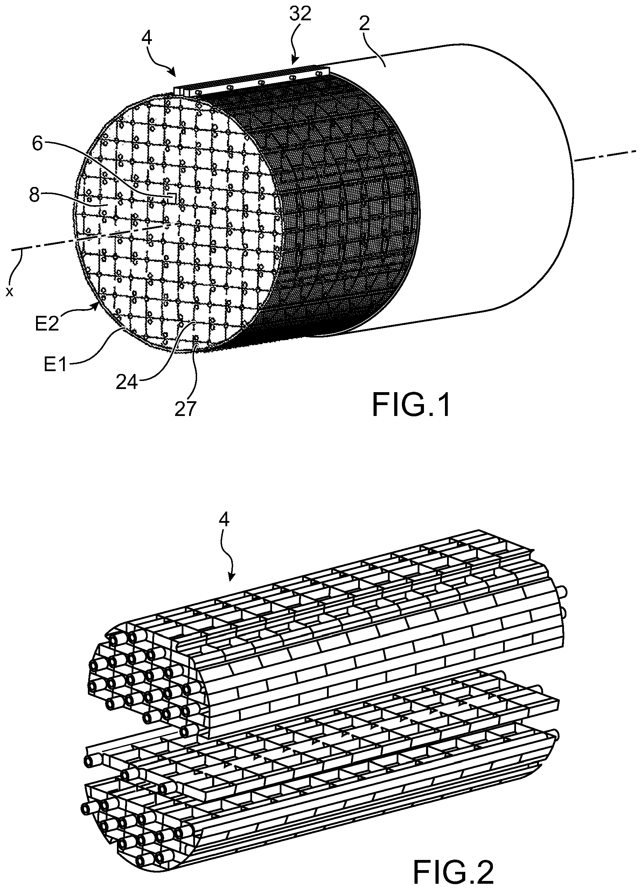

Sur la figure 1, on peut voir un exemple de réservoir selon l'invention comportant une enceinte extérieure 2 apte à tenir la pression d'hydrogène, et une structure interne 4 de réception d'un matériau de stockage d'hydrogène 6 représentée seul sur la figure 2.

L'enceinte extérieure a, dans l'exemple représenté, la forme d'un cylindre à section circulaire d'axe longitudinal X. Cette forme est avantageuse pour la tenue à la pression, à l'instar d'une forme torique, mais n'est en aucun cas limitative, l'enceinte pourrait par exemple avoir une section carrée ou rectangulaire.

Le réservoir est destiné à être disposé sensiblement horizontalement en fonctionnement. Par conséquent, l'axe X est destiné à être à l'horizontal ou sensiblement à l'horizontal.

En général, le réservoir est raccordé à un circuit de circulation d'hydrogène connecté à une ou aux deux extrémités longitudinales de l'enceinte pour charger le réservoir en hydrogène et décharger le réservoir de l'hydrogène. En outre, un système d'échange thermique qui sera décrit par la suite assure la circulation d'une extrémité longitudinale à l'autre d'un caloporteur. Le réservoir est donc soumis généralement à des flux d'hydrogène et de caloporteur orientés longitudinalement.

Le réservoir, et plus particulièrement la structure interne présente alors avantageusement une architecture adaptée aux flux longitudinaux. Mais la présente invention peut être adaptée à des flux ayant une autre orientation.

Dans la présente demande, on qualifie de « supérieur » et « inférieur » un élément ou une partie d'élément destiné à avoir une position haute ou basse dans la représentation du réservoir de la figure 1, mais ceci n'est en aucun cas limitatif.

L'enceinte extérieure 2 est par exemple en acier inox, en aluminium ou en matériau composite tissée. Dans le cas de réservoirs hydrures dits basse pression, les pressions auxquelles l'enceinte résiste sont de l'ordre de 1 à 50 bars d'hydrogène. Dans les applications à des pressions plus hautes, les pressions auxquelles résiste l'enceinte sont comprises entre 50 bars et 350 bars, voire 700 bars.

La structure interne 4 comporte une pluralité d'étages E1, E2,... En, n étant un entier naturel, superposés.

Chaque étage E1, E2,... En est divisé en compartiments 8. Plus particulièrement, chaque étage comporte un fond inférieur 9, des cloisons longitudinales 10, des cloisons transversales 12 et un fond supérieur 14 délimitant les compartiments 8.

Avantageusement, les compartiments présentent un faible élancement, i.e. une hauteur réduite par rapport à sa surface pour éviter une concentration de contraintes dans la partie inférieure des cloisons lors du gonflement du matériau de stockage d'hydrogène.

Par exemple, afin d'obtenir des caractéristiques d'absorption de l'hydrogène dans le réservoir de l'ordre de quelques dizaines de minutes, les dimensions des cellules peuvent se situer entre environ 25mm à 50mm pour la largeur et la profondeur dans la direction X des compartiments et la hauteur des compartiments peuvent se situer en 5 mm et 50 mm environ.

Lors du remplissage ave matériau granulaire, i.e. de l'hydrure broyé, n'ayant pas encore été hydruré, l'espace au-dessus du matériau est compris entre environ 20% et 40% de la hauteur totale du compartiment. Dans le cas où l'hydrure non encore hydruré est sous forme de bloc, l'espace libre au-dessus du sera compris entre environ 50% et 70% de la hauteur de la cellule, un espace libre autour du bloc dans les directions de la largeur et de la longueur peut également être ménagé.

L'espace libre au-dessus de la poudre présente une hauteur comprise entre 5 mm et 10 mm de hauteur, suivant le gonflement de l'hydrure utilisé.

La structure interne 4 comporte également un système d'échange thermique 16 apte à assurer un retrait de chaleur des compartiments et un apport de chaleur dans les compartiments de manière homogène, c'est-à-dire situé au plus proche du matériau hydrure. Le système d'échange thermique 16 est disposé entre chaque étage et utilise entre autres les cloisons longitudinales comme surfaces d'échange thermique.

Pour cela, le système d'échange thermique 16 comporte des canaux 18 s'étendant longitudinalement à travers la structure et courant le long des fonds inférieurs et des fonds supérieurs 14.

De manière particulièrement avantageuse, on réalise des éléments 26 comportant le fond inférieur 9 ou le fond supérieur 14 et les cloisons longitudinales 10 d'un seul tenant, par exemple par pliage d'un feuillard métallique comme cela est visible sur la figure 2. La réalisation de cet élément 26 d'un seul tenant, outre le fait que la fabrication est simplifiée puisque le nombre de pièces est réduit et que l'on évite le recours à un assemblage par soudure, permet d'assurer simplement à la fois une étanchéité entre chaque étage empêchant le matériau de stockage d'hydrogène de passer d'un étage à l'autre, notamment de tomber dans les étages inférieurs, et une étanchéité transversale au moyen des cloisons longitudinales.

De manière également très avantageuse, on prévoit de réaliser des éléments 26 sensiblement similaires pour définir le fond inférieur et des cloisons longitudinales et pour définir le fond supérieur et des cloisons longitudinales. L'assemblage de ces deux sous-structures délimite les compartiments.

Pour le montage des cloisons transversales 12, on réalise des découpes verticales 20 dans les cloisons longitudinales 12 au niveau de leur extrémité libre le long de l'axe X, leur espacement définissant la longueur des compartiments. Des découpes similaires dans les cloisons transversales 12 sont également réalisées. Lors du montage des cloisons transversales 12, les découpes sont mises en correspondance et les cloisons 10, 12 se pénètrent l'une l'autre, de sorte à former des « casiers ». Les découpes dans les cloisons longitudinales et transversales ont une longueur inférieure à la hauteur des cloisons.

Les cloisons longitudinales 10 et transversales 12 limitent le déplacement transversal et longitudinal, respectivement, du matériau de stockage d'hydrogène.

Par exemple, si le réservoir est embarqué dans un véhicule automobile, celui-ci n'a pas nécessairement toujours une position sensiblement horizontale et peut subir des vibrations, tendant à déplacer la poudre. En outre, ces cloisons assurent une rigidification des étages.

De manière également particulièrement avantageuse, on intègre le système d'échange thermique dans la structure interne 4 lors de la réalisation des cloisons longitudinales 10. Pour cela, la base des cloisons longitudinales 10 est formée par une rainure 30 d'axe longitudinal de section semi-circulaire. En assemblant un fond supérieur et un fond inférieur, les deux rainures sont face à face et délimitent un cylindre formant un canal 18.

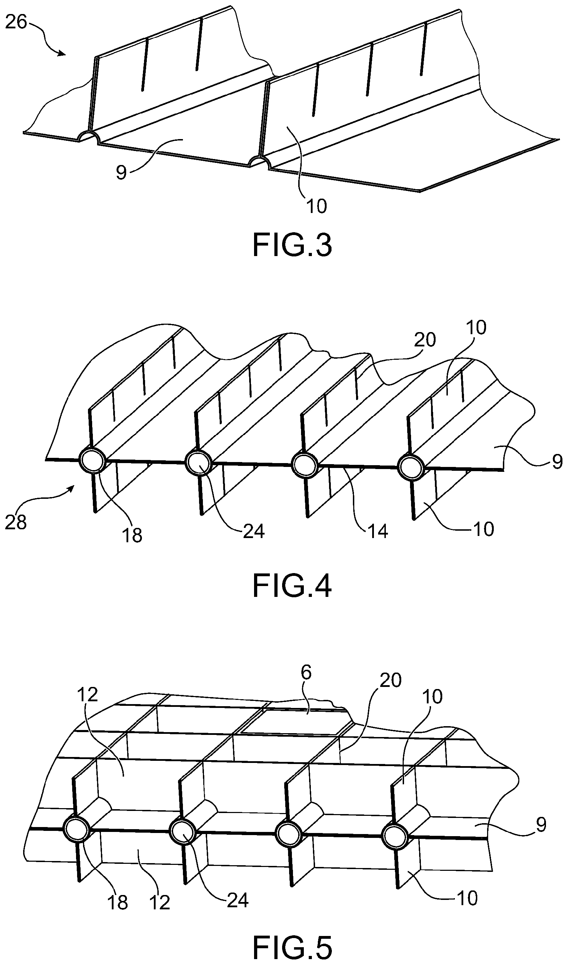

Le canal 18 peut former directement un canal d'écoulement d'un caloporteur ou alors on peut prévoir, comme cela est représenté sur les figures 4 et 5, d'introduire un tuyau 24 dans le canal 18. De manière avantageuse, le tuyau 24 est brasé sur le feuillard pour améliorer les échanges thermiques. En variante, il peut être maintenu serré dans la rainure 30, soit par soudure par point des deux plaques 9 et 14, soit par serrage global grâce au dispositif de serrage selon la présente invention comme cela sera décrit ci-dessous.

Le canal 18 ou le tuyau 24 est raccordé par une extrémité (non représentée) à une alimentation en caloporteur et l'autre extrémité (non représentée) est raccordée à une évacuation de caloporteur. Le tuyau 24 est par exemple en aluminium ou en acier inox.

Du matériau de stockage d'hydrogène est disposé dans chaque compartiment.

Un volume libre 25 est prévu au-dessus de la poudre pour éviter les interactions mécaniques entre le matériau et le fond supérieur lorsque le matériau gonfle du fait du chargement en hydrogène.

Ce volume libre 25 est réalisé en prévoyant lors de l'assemblage un jeu entre le matériau et la structure. Par exemple, lorsque le matériau mis en place est sous forme de lingot, un jeu latéral et un jeu avec le fond supérieur sont prévus. Après les différentes décrépitations, le matériau forme un lit de poudre en contact avec les parois latérales et séparé du fond supérieur par le volume libre 25. Le matériau peut aussi être mis en place sous forme de broyât ou déjà décrépité par l'hydrogène .Dans le cas de matériau décrépité, on travaille sous protection de gaz neutre, par exemple en boîte à gants, car le matériau devient alors fortement réactif à l'air.

Dans le cas de mise en place sous forme de poudre, on s'assure de disposer au-dessus de la poudre et dans la porosité de cette poudre, d'un espace suffisant permettant la respiration du matériau (gonflement/dégonflement) du matériau. Le volume de matériau qu'il est possible d'introduire, ou plutôt la masse de matériau (masse est appelée MIVD pour Masse Introduite de Matériau dans le Volume Disponible) peut être déterminée au moyen d'un banc de mesure représentant un compartiment élémentaire et qui permet de mesurer la contrainte créée par le matériau sur les parois du compartiment pour différentes MIVD.

Pour effectuer le chargement du matériau avec l'hydrogène, on peut faire simplement circuler de l'hydrogène dans les compartiments au niveau des parties supérieures des compartiments, l'hydrogène circulant dans les volumes libres 25. A cet effet, on peut prévoir que les parois transversales 12 soient ajourées, de préférence dans leur partie supérieure en correspondance avec le volume libre 25.

On peut également ajouter des tubes poreux 27 d'alimentation en hydrogène traversant le matériau de stockage d'hydrogène dans le cas où la perméation entre le matériau de stockage d'hydrogène et l'hydrogène situé dans le volume libre 25 n'est pas suffisante, du fait de la densification du matériau lors des décrépitations successives. Dans le cas où l'on prévoit des tuyaux poreux, les cloisons transversales 12 sont découpées pour permettre le passage des tuyaux 27. Par exemple, on prévoit un tuyau par rangée de compartiments s'étendant le long de la direction longitudinale. Ces tubes permettent également de récolter l'hydrogène désorbé.

Avantageusement, les tubes 27 se situent au fond des compartiments et sensiblement le long de leur axe longitudinal. Alternativement, ils peuvent passer dans le volume libre 25.

Les cloisons transversales 12 comportent avantageusement des échancrures ou des encoches (non représentées) ou niveau de leur extrémité supérieure pour permettre la circulation d'hydrogène d'un compartiment à un autre se suivant le long de l'axe X.

On peut prévoir de telles échancrures dans les cloisons longitudinales.

La collecte de l'hydrogène, lors d'une désorption, s'effectue également par les volumes libres 25 des compartiments.

Le matériau formant la structure 4 est préférentiellement un très bon conducteur thermique pour assurer un retrait ou un apport efficace de la chaleur. Avantageusement, la structure est réalisée en aluminium. On peut également prévoir d'utiliser du cuivre. Ces matériaux présentent en outre l'avantage de permettre une mise en forme aisée, notamment par pliage et découpe. On peut également utiliser de l'acier inox.

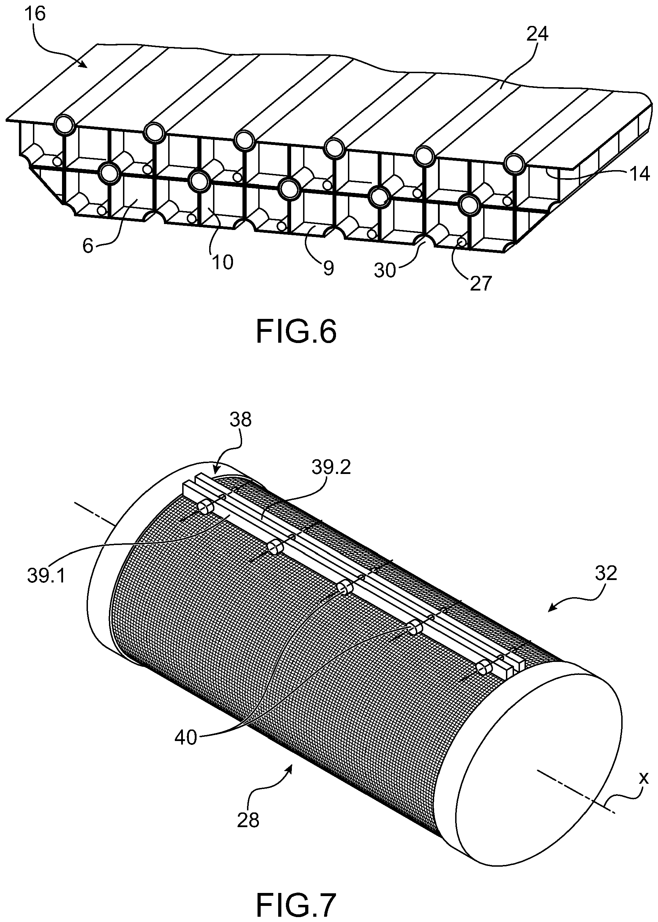

Le réservoir comporte également un dispositif de serrage 28 disposé sur la surface latérale extérieure de la structure interne 4 autour de l'axe longitudinal X et apte à exercer un effort de serrage afin de ceinturer la structure interne 4 (figure 7). Les étages sont alors maintenus les uns contre les autres, ce qui assure un meilleur confinement de l'hydrure dans les compartiments et augmentant la compacité de la structure. En outre ce dispositif de serrage 28 est apte à permettre l'écoulement de l'hydrogène gazeux et à retenir l'hydrure qui pourrait encore s'échapper des compartiments.

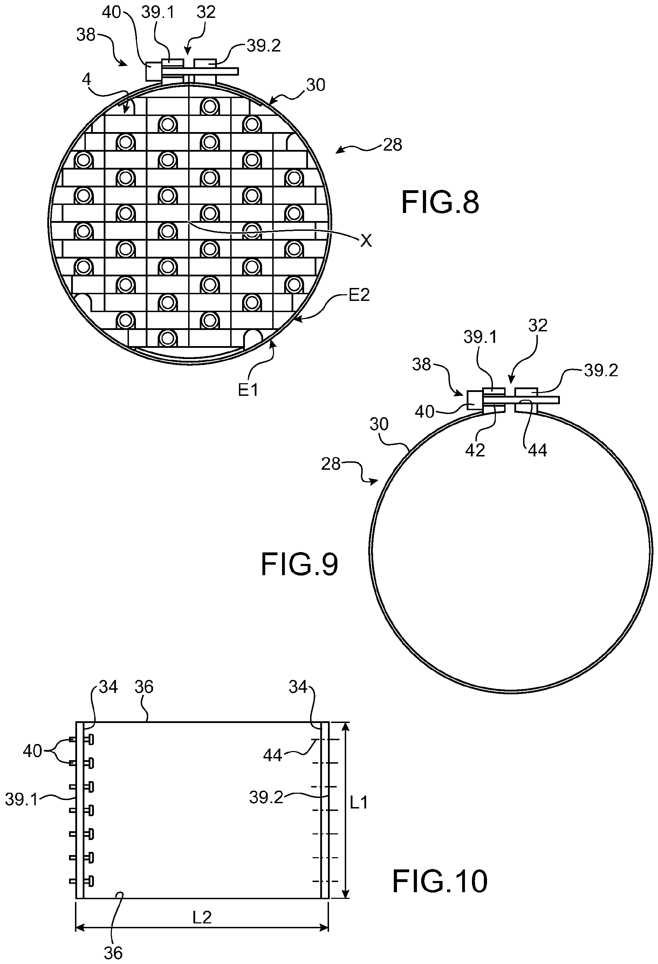

Pour cela, le dispositif de serrage 28 comporte une toile 30 (figures 8 et 9) recouvrant au moins en partie la surface latérale extérieure de la structure interne 4. La toile est perméable à l'hydrogène gazeux et étanche à l'hydrure sous forme de poudre. Des moyens mécaniques 32 permettent d'exercer un effort de serrage sur la structure interne 4 par l'intermédiaire de la toile 30.

De manière préférée, la toile 30 comporte un tissu métallique dont la taille des mailles est inférieure à la plus petite granulométrie de l'hydrure pulvérulent. Par exemple le tissu métallique est réalisé en un alliage métallique qui est apte à ne pas casser/se déchirer sous l'effort de serrage. En outre il est choisi de sorte à ne pas être fragilisé au contact de l'hydrogène. De manière avantageuse, le tissu métallique est réalisé par tissage de fils d'acier inoxydable, avantageusement d'acier inoxydable austénitique tel que le 316L, en fils en alliage d'aluminium, en fils de titane, etc...

En variante, la toile 30 pourrait comporter un tissu en matériau synthétique. Le matériau synthétique est choisi de sorte à être stable dans l'hydrogène et de sorte qu'il ne relargue pas de sous-produits susceptibles de modifier le comportement de l'hydrogène. Le matériau synthétique peut être chois i parmi les exemples en polymère, par exemple par le polyamide tel que le Nylon®, le polyéthylène, le polyester.

La mise en œuvre d'un tissu polymère est plus adaptée à des hydrures dont la température de fonctionnement est de l'ordre de la centaine de °C.

Typiquement, l'hydrure décrépité en poudre a une granulométrie comprise entre 1 µm et 10 µm, le tissu a alors par exemple une maille de taille inférieure à 1 µm.

Il peut être envisagé de mettre en œuvre plusieurs couches de tissus, par exemple ayant des tailles de maille différentes, ce qui permet de réaliser une filtration graduelle de l'hydrure pulvérulent.

Sur la figure10, on peut voir le dispositif de serrage disposé à plat. La toile présente une forme rectangulaire comportant deux premiers côtés parallèles 34 et ayant une première dimension L1 et deux deuxièmes côtés parallèles 36 et ayant une deuxième dimension L2. La première dimension L1 est sensiblement égale à la dimension de la structure dans la direction de l'axe longitudinal. La deuxième dimension L2 est, dans l'exemple représenté, légèrement inférieure au périmètre de la structure en considérant un plan orthogonal à l'axe longitudinal X.

Dans l'exemple représenté, les moyens mécaniques comportent deux profilés 39.1, 39.2 fixés sur les deux premiers côtés 34 de la toile et un système de solidarisation 38 destiné à solidariser les deux profilés l'un à l'autre. Les deux profilés sont de préférence réalisés en métal ou alliage métallique, par exemple en acier inoxydable. En variante, les profilés pourraient être réalisés en matière synthétique telle que le plastique, leur épaisseur étant choisie pour présenter une rigidité suffisante. Les profilés sont fixés sur les côtés 34 de la toile par exemple au moyen de vis ou de rivets traversant le profilé et le tissu ou par soudage, de préférence par soudage par fusion, par exemple mettant en œuvre une électrode en tungstène sous gaz inerte ou soudage TIG (*Tungsten Inert Gas* en terminologie anglo-saxonne) ou par brasage. Le soudage diffusion peut également être envisagé.

Le système de solidarisation 38 comporte, dans l'exemple représenté, plusieurs vis 40 montées dans des alésages 42 réalisés dans le profilé 39.1, et libres de se déplacer dans l'alésage et des alésages 44 réalisés dans l'autre profilé 39.2 de sorte que chaque alésage 44 soit aligné avec un alésage 42. En outre les alésages 44 sont munis d'un taraudage correspondant au filetage des vis. Ainsi les vis 40 sont vissées dans les alésages 44 et assurent une solidarisation des deux profilés. En outre en choisissant la deuxième dimension légèrement inférieure au périmètre de la structure, un effort de serrage est appliqué par l'élément 30 sur la structure comme cela est visible sur la figure 8.

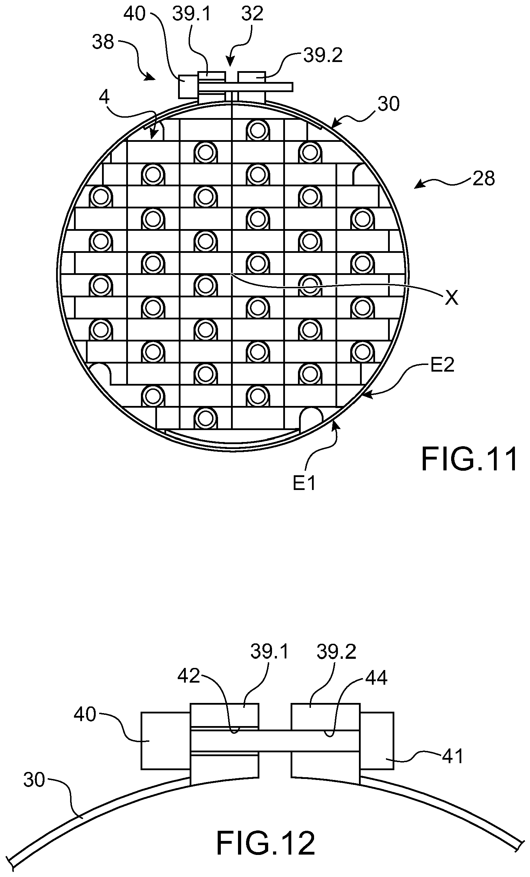

En variante, on pourrait envisager que les alésages 44 soient dépourvus de taraudage et que les vis coopèrent avec des écrous 41 situés à l'opposé du profilés 39.1 par rapport au profilé 39.2 comme cela est schématisé sur la figure 12.

De manière avantageuse, on prévoit de disposer des moyens 46 pour assurer l'étanchéité au niveau du jeu 48 entre les deux réglettes 39.1, 39.2. Il peut s'agir d'une bande du tissu métallique composant la toile 30 qui est mis en place sur la structure au niveau de l'emplacement des profilés. Les moyens 46 assurent alors à la fois l'étanchéité à la poudre et le passage de l'hydrogène gazeux.

En variante, puisque ces moyens 46 n'ont pas à tenir de contrainte mécanique il pourrait s'agir d'un tissu n'offrant pas de tenue mécanique suffisante ou d'un feutre assurant uniquement la perméabilité à l'hydrogène gazeux et l'étanchéité à l'hydrure pulvérulent. En variante encore, les moyens 46 pourraient ne pas être perméables à l'hydrogène gazeux. Il pourrait par exemple s'agir d'une tôle assurant le confinement de la poudre. Ou il pourrait être envisagé de mettre un joint qui serait fixé à l'un des profilés qui viendrait en contact avec l'autre profil et serait déformé lorsque les deux profilés seraient solidarisés l'une à l'autre. Il pourrait par exemple s'agir d'un joint en tôle métallique pliée ou en polymère compatible avec l'hydrogène et non susceptible de polluer l'hydrogène, par exemple en caoutchouc ou en fluoroélastomère, tel que le Viton®.

Selon une autre variante, on pourrait envisager que la deuxième longueur L2 de la toile soit supérieure au périmètre de la structure interne 4 et que le profilé 39.2 soit fixé, non pas sur le bord mais sur la surface de la toile de telle sorte que la distance entre les deux profilés 39.1, 39.2 soit inférieure au périmètre de la structure. Ainsi la bande de tissu dépassant du profilé 39.2 servirait à rendre étanche le jeu entre les deux profilés.

Sur la figure 11, on peut voir un autre exemple de réalisation dans lequel l'effort de serrage est appliqué sur la structure en utilisant des éléments 50 sous forme d'agrafe solidarisant l'un à l'autre les deux profilés. Par exemple les agrafes 50 comportent deux extrémités repliées pénétrant dans des rainures 52 réalisées sur les faces des profilés 39.1, 39.2 qui ne sont pas en regard lorsque les profilés sont solidarisés l'un à l'autre. Les rainures sont par exemple réalisées sur toute la longueur des profilés ou sont réalisées de manière discrète aux emplacements souhaités du montage des agrafes.

Il pourrait être envisagé de réaliser un dispositif de serrage en plusieurs parties, i.e. comportant par exemple deux parties, comprenant chacune un tissu et deux profilés, un profilé d'une partie étant assemblé à profilé de l'autre partie.

Un réservoir dont la structure de stockage aurait une structure similaire à celle du réservoir de la demande WO2005//058044 ne sort pas du cadre de la présente invention.

Nous allons maintenant décrire un exemple d'un procédé de réalisation d'un réservoir de la figure 1.

On réalise les éléments de la structure comportant les compartiments. Des éléments intermédiaires sont représentés sur les figures 3 et 4.

Des cloisons transversales 12 sont ensuite mises en place pour délimiter des compartiments. Dans cet exemple, des tuyaux 24 sont prévus pour la circulation du caloporteur, ils sont avantageusement brasés sur les éléments dans les rainures, ce qui a pour effet d'améliorer les échanges thermiques entre les tuyaux et les éléments. L'élément de la figure 5 est obtenu.

Lors d'une étape suivante, on dispose le matériau de stockage d'hydrogène sur le fond inférieur des compartiments. Ce matériau peut être sous la forme de poudre.

De manière particulièrement avantageuse, le matériau de stockage d'hydrogène est sous forme d'un lingot solide 6 (figure 5). Plusieurs lingots peuvent être disposés dans chaque compartiment. La mise en œuvre de lingots permet de faciliter la mise en place du sous ensemble suivant. La forme des lingots est sensiblement analogue à celle des compartiments.

Les tubes poreux d'amenée de l'hydrogène sont mis en place également lors de cette étape.

Lors d'une étape suivante, on dispose un élément intermédiaire de la figure 3 sur le sous-ensemble comportant le matériau de stockage d'hydrogène, en disposant les cloisons longitudinales entre deux cloisons longitudinales du sous-ensemble entre deux lingots, comme cela est représenté sur la figure 6. Un étage est ainsi formé. L'extrémité libre des cloisons longitudinales du sous-ensemble supérieur est en contact avec le fond inférieur du premier sous-ensemble et l'extrémité libre des cloisons longitudinales du sous-ensemble inférieur est en contact avec le fond du deuxième sous-ensemble supérieur. Ces contacts ne sont pas étanches, mais sont suffisamment étroits pour limiter le passage de grosses quantités de matériau d'un compartiment à l'autre. De même pour les cloisons transversales, celles-ci ne sont pas étanches, cependant elles forment une barrière suffisante. Par ailleurs, il est rappelé que l'axe du réservoir est destiné à rester sensiblement horizontal. Par conséquent les mouvements latéraux du matériau sont faibles. Par contre, grâce à l'invention la séparation entre étages étant d'un seul tenant le passage de matériau vers un étage inférieur est empêché.

On répète les étapes précédentes jusqu'à obtenir la structure interne de la taille souhaitée.

Les sous-éléments sont immobilisés les uns par rapport aux autres suivant les directions longitudinale et transversale du fait de leur imbrication par l'intermédiaire des cloisons transversales 12 et des découpes verticales 20 dans lesquelles s'insèrent les cloisons transversales 12.

Il est bien entendu que le premier et le dernier étage ne sont pas réalisés exactement comme les étages intermédiaires. En effet, dans l'exemple représenté, le premier étage ne comporte qu'un fond supérieur et des cloisons longitudinales et transversales et le dernier sous-ensemble ne comporte qu'un fond inférieur, des cloisons longitudinales et transversales.

Lors d'une étape suivante, le dispositif de serrage 28 est monté autour de la structure. Pour cela, la toile 30 entoure la structure interne 4 et est en contact avec sa surface latérale extérieure. Ensuite les profilés 39.2, 39.2 sont mis en regard et solidarisés entre eux au moyen des vis 40. Un effort de serrage s'exerce sur la structure par l'intermédiaire de la toile et du serrage des vis 40. Les sous-ensembles sont alors maintenus fermement les uns contre les autres. Le confinement de la poudre est alors amélioré. En outre, les contacts entre les tuyaux et le matériau des compartiments sont augmentés, améliorant les échanges thermiques.

De plus la manipulation de la structure est facilitée, elle peut être introduite plus facilement dans l'enceinte extérieure 2. Les connexions des tuyaux poreux et des tuyaux du système d'échange thermiques sont effectuées et l'enceinte est fermée de manière étanche.

Lors des premiers chargements en hydrogène, un phénomène de décrépitation apparaît, i.e. l'hydrogène est absorbé par les lingots métalliques, qui gonflent et éclatent en fines particules formant une poudre

Après plusieurs étapes de chargement, le compartiment contient de la poudre en contact avec le fond inférieur et les parois latérales et transversales.

A titre d'exemple, le matériau disposé dans les compartiments peut être composé de un ou plusieurs matériaux utilisés pour le stockage de l'hydrogène. Ces matériaux de stockage d'hydrogène peuvent être choisis à partir des différentes familles telles que AB, A₂B, A₂B₇, AB₂ ou AB₅ ou être un mélange de ces familles de matériaux.

Les hydrures métalliques réversibles de formule AmBn sont constitués d'un élément A formant un hydrure stable tel que les métaux alcalins ou alcalino-terreux comme le lithium, le calcium ou le magnésium, les métaux de transition de quatrième ou cinquième colonne comme le zirconium, le titane, ou enfin les terres rares métalliques comme le lanthane, le cérium et d'un élément B formant un hydrure instable dans les conditions standards, tel que la plupart des métaux de transition comme le chrome, le cobalt, le nickel ou le fer.

Ces matériaux peuvent avoir une structure cubique centrée (cc), une structure cubique à faces centrées (cfc) ou une structure cristallographique de type C-14 ou C-15.

Par exemple, ces matériaux peuvent être
Mg, Mg-Ni, Mg-Cu, Ti-Fe, Ti-Mn, Ti-Ni, Ti-V, Mn-Ni,
Ti-V-Cr, Ti-V-Fe. Les capacités d'absorption de l'hydrogène en fonction des pressions et des températures utilisées varient suivant les matériaux de stockage d'hydrogène.

D'autres matériaux absorbant l'hydrogène comme les hydrures chimiques complexes avec des éléments légers tels que les alanates (NaAIH4), les hydrures à base de Li et de B tels que LiBH4, NaBH4, ou alors des imides ou des amides, peuvent aussi être utilisés dans la géométrie décrite dans la présente invention.

Le dispositif de serrage ne perturbe pas les étapes de charge et de décharge du réservoir puisqu'il est perméable à l'hydrogène gazeux. Il peut même les rendre plus rapides du fait de l'amélioration des échanges thermiques.

En outre, le dispositif de serrage assurent un confinement supplémentaire de l'hydrure, il offre l'avantage, lorsque la structure doit être retirée de l'enceinte, que de la poudre ne se retrouve pas dans le fond de l'enceinte.

Des réservoirs dans lesquels la structure interne aurait une forme autre qu'une forme cylindrique de révolution, telle qu'une forme de parallélépipède rectangle ne sort pas du cadre de la présente invention.

Le réservoir selon la présentation invention peut être appliqué dans l'ensemble des applications mettant en œuvre un stockage de l'hydrogène, à la fois, dans les domaines mettant en œuvre un stockage de grandes quantités et ceux nécessitant des stockages de petites quantités.

Par exemple, il peut être utilisé comme réservoir pour les moyens de locomotion, comme les bateaux, les sous-marins tels que les voitures particulière, les autobus, les camions, engins de chantier et agricoles, les véhicules à deux roues.

Il peut également être utilisé dans les alimentations pour les dispositifs portables tels que les appareils électronique portables (téléphone portable, ordinateur portables,...).

Il peut aussi être appliqué aux systèmes de stockage en plus grosse quantité, telle que pour des groupes électrogènes, pour le stockage de l'hydrogène produit en grande quantité grâce à l'énergie des éoliennes, des panneaux photovoltaïques, de la géothermie.

## Revendications

1. Réservoir destiné au stockage de l'hydrogène par absorption dans un matériau de stockage de l'hydrogène, ledit réservoir ayant un axe longitudinal (X) destiné à être orienté sensiblement horizontalement, et comportant :
- une enceinte extérieure (2),
- une structure interne (4) d'axe longitudinal (X), la structure interne (4) comportant une pluralité d'étages (E1, E2, ...En) et un système d'échange thermique au sein de la structure interne (4), chaque étage (E1, E2,... En) comportant une pluralité de compartiments (8) destinés à recevoir le matériau de stockage de l'hydrogène,
- un dispositif de serrage (28) exerçant un effort de serrage sur la surface extérieure de la structure interne (4) de sorte à maintenir les étages les uns contre les autres, ledit dispositif de serrage (28) comportant au moins une toile (30) perméable à l'hydrogène gazeux et étanche à une poudre du matériau de stockage de l'hydrogène, ladite toile (30) étant disposée sur au moins une partie de la surface extérieure de la structure interne (4) autour de l'axe longitudinal (X) de sorte à l'envelopper au moins en partie, ledit dispositif de serrage (28) comportant des moyens de maintien (32) pour maintenir la toile (30) serrée autour de la structure interne (4) de sorte qu'elle exerce ledit effort de serrage.

2. Réservoir selon la revendication 1, dans lequel la toile (30) est un tissu présentant une taille de maille inférieure à la granulométrie la plus fine de la poudre du matériau de stockage de l'hydrogène.

3. Réservoir selon la revendication 2, dans lequel la taille de maille est inférieure à 1 µm.

4. Réservoir selon la revendication 2 ou 3, dans lequel le tissu est un tissu métallique, avantageusement en acier inoxydable.

5. Réservoir selon la revendication 1 à 4, dans lequel la toile (30) présente une forme de rectangle comportant deux premiers côtés (34) ayant une première dimension (L1) et parallèles entre eux et deux deuxièmes côtés (36) ayant une deuxième dimension (L2) et parallèles entre eux, la première dimension (L1) étant sensiblement égale à la dimension de la structure interne (4) dans la direction de l'axe longitudinal (X) et la deuxième dimension (L2) étant inférieure au périmètre de la structure interne (4) dans un plan orthogonal à l'axe longitudinal (X), et dans lequel les moyens de maintien (32) tendent à rapprocher les deuxièmes côtés (36).

6. Réservoir selon la revendication 5, dans lequel les moyens de maintien (32) comportent un premier profilé (39.1) fixé sur l'un des deuxièmes côtés (36) et un deuxième profilé (39.2) fixé sur l'autre (36) des deuxièmes côtés et des moyens (38) pour solidariser les premier (39.1) et deuxième (39.2) profilés de sorte qu'ils exercent une traction sur la toile (30).

7. Réservoir selon la revendication 6, dans lequel les moyens de solidarisation (38) comportent au moins une vis (40) montée dans un premier alésage (42) du premier profilé, ladite vis étant montée libre en translation dans ledit premier alésage (42) et coopérant avec un taraudage formé dans le deuxième profilé (39.2) ou avec un écrou disposé à l'opposé du premier profilé (39.1) par rapport au deuxième profilé (39.2).

8. Réservoir selon la revendication 6, dans lequel les moyens de solidarisation comportent une pluralité de vis (40) montées dans des premiers alésages (42) du premier profilé (39.1), montées libres en translation dans lesdits premiers alésages (42) répartis dans la direction de l'axe longitudinal (X), chacune des vis (40) coopérant avec un taraudage formé dans le deuxième profilé (39.2) ou avec un écrou disposé à l'opposé du premier profilé par rapport au deuxième profilé (39.2).

9. Réservoir selon la revendication 6, dans lequel les moyens de maintien comportent au moins une agrafe (50), avantageusement plusieurs agrafes, chevauchant les premier et deuxième profilés (39.1, 39.2).

10. Réservoir de stockage d'hydrogène comportant un réservoir selon l'une des revendications 1 à 9, et du matériau de stockage d'hydrogène (6) disposé dans les compartiments (8).

## Patentansprüche

1. Tank zur Speicherung von Wasserstoff durch Absorption in einem Wasserstoffspeichermaterial, wobei der Tank eine Längsachse (X) aufweist, die im Wesentlichen horizontal ausgerichtet sein soll, und enthält:
- eine äußere Umhüllung (2),
- eine innere Struktur (4) mit einer Längsachse (X), wobei die innere Struktur (4) eine Vielzahl von Stufen (E1, E2, ...En) und ein Wärmeaustauschsystem innerhalb der inneren Struktur (4) umfasst, wobei jede Stufe (E1, E2, ...En) eine Vielzahl von Fächern (8) enthält, die dazu bestimmt sind, das Wasserstoffspeichermaterial aufzunehmen,
- eine Klemmvorrichtung (28), die eine Klemmkraft auf die Außenfläche der inneren Struktur (4) ausübt, um die Stufen gegeneinander zu halten, wobei die Klemmvorrichtung (28) mindestens ein Tuch (30) aufweist, das für Wasserstoffgas durchlässig und für ein Pulver des Wasserstoffspeichermaterials undurchlässig ist, wobei das Tuch (30) auf mindestens einem Teil der Außenfläche der inneren Struktur (4) um die Längsachse (X) herum so angeordnet ist, dass es diese mindestens teilweise umhüllt, wobei die Klemmvorrichtung (28) Haltemittel (32) aufweist, um das Tuch (30) um die innere Struktur (4) herum so in Klemmung zu halten, dass es die Klemmkraft ausübt.

2. Tank nach Anspruch 1, wobei das Tuch (30) ein Gewebe mit einer Maschenweite ist, die kleiner ist als die feinste Teilchengröße des Pulvers des Wasserstoffspeichermaterials.

3. Tank nach Anspruch 2, wobei die Maschenweite kleiner als 1 µm ist.

4. Tank nach Anspruch 2 oder 3, wobei das Gewebe ein Drahtgewebe, vorzugsweise aus rostfreiem Stahl, ist.

5. Tank nach Anspruch 1 bis 4, wobei das Tuch (30) die Form eines Rechtecks mit zwei ersten Seiten (34), die eine erste Abmessung (L1) haben und parallel zueinander verlaufen, und mit zwei zweiten Seiten (36), die eine zweite Abmessung (L2) haben und parallel zueinander verlaufen, aufweist, wobei die erste Abmessung (L1) im Wesentlichen gleich der Abmessung der inneren Struktur (4) in Richtung der Längsachse (X) ist und die zweite Abmessung (L2) kleiner ist als der Umfang der inneren Struktur (4) in einer zur Längsachse (X) orthogonalen Ebene, und wobei die Haltemittel (32) dazu neigen, die zweiten Seiten (36) einander näher zu bringen.

6. Tank nach Anspruch 5, wobei die Haltemittel (32) ein erstes Profil (39.1), das an einer der zweiten Seiten (36) befestigt ist, und ein zweites Profil (39.2), das an der anderen (36) der zweiten Seiten befestigt ist, sowie Mittel (38) zum festen Verbinden des ersten (39.1) und des zweiten (39.2) Profils umfassen, so dass sie eine Zugkraft auf das Tuch (30) ausüben.

7. Tank nach Anspruch 6, wobei die Verbindungsmittel (38) mindestens eine Schraube (40) aufweisen, die in einer ersten Bohrung (42) des ersten Profils montiert ist, wobei die Schraube in der ersten Bohrung (42) frei verschiebbar montiert ist und mit einem in dem zweiten Profil (39.2) ausgebildeten Innengewinde oder mit einer Mutter zusammenwirkt, die dem ersten Profil (39.1) in Bezug auf das zweite Profil (39.2) entgegengesetzt angeordnet ist.

8. Tank nach Anspruch 6, wobei die Verbindungsmittel eine Vielzahl von Schrauben (40) aufweisen, die in ersten Bohrungen (42) des ersten Profils (39.1) montiert und in den ersten Bohrungen (42) frei verschiebbar sind, welche in Richtung der Längsachse (X) verteilt sind, wobei jede der Schrauben (40) mit einem im zweiten Profil (39.2) ausgebildeten Innengewinde oder mit einer Mutter zusammenwirkt, die dem ersten Profil in Bezug auf das zweite Profil (39.2) entgegengesetzt angeordnet ist.

9. Tank nach Anspruch 6, wobei die Haltemittel mindestens eine Klammer (50), vorzugsweise mehrere Klammern, aufweisen, die das erste und zweite Profil (39.1, 39.2) überlappen.

10. Wasserstoffspeichertank mit einem Tank nach einem der Ansprüche 1 bis 9 und mit einem Wasserstoffspeichermaterial (6), das in den Fächern (8) angeordnet ist.

## Claims

1. A tank for storing hydrogen by absorption in a hydrogen storage material, said tank having a longitudinal axis (X) for being substantially horizontally oriented, and including:
- an outer enclosure (2),
- an internal structure (4) with a longitudinal axis (X), the internal structure (4) including a plurality of stages (E1, E2, ... En) and a heat exchange system within the internal structure (4), each stage (E1, E2, ... En) including a plurality of compartments (8) for receiving the hydrogen storage material,
- a clamping device (28) exerting a clamping load on the outer surface of the internal structure (4) so as to hold the stages against each other, said clamping device (28) including at least one canvas (30) pervious to hydrogen gas and impervious to a powder of the hydrogen storage material, said canvas (30) being disposed over at least part of the outer surface of the internal structure (4) about the longitudinal axis (X) so as to at least partly wrap it, said clamping device (28) including holding means (32) for holding the canvas (30) clamped around the internal structure (4) so that it exerts said clamping load.

2. The tank according to claim 1, wherein the canvas (30) is a fabric having a mesh size lower than the finest grain size distribution of the powder of the hydrogen storage material.

3. The tank according to claim 2, wherein the mesh size is lower than 1µm.

4. The tank according to claim 2 or 3, wherein the fabric is a metal fabric, advantageously of stainless steel.

5. The tank according to claims 1 to 4, wherein the canvas (30) has a rectangle form including two first sides (34) having a first dimension (L1) and parallel to each other and two second sides (36) having a second dimension (L2) and parallel to each other, the first dimension (L1) being substantially equal to the dimension of the internal structure (4) in the direction of the longitudinal axis (X) and the second dimension (L2) being lower than the perimeter of the internal structure (4) in a plane orthogonal to the longitudinal axis (X), and wherein the holding means (32) tend to bring the second sides (36) closer to each other.

6. The tank according to claim 5, wherein the holding means (32) include a first profile (39.1) fastened to one of the second sides (36) and a second profile (39.2) fastened to the other (36) of the second sides and means (38) for securing a first (39.1) and second (39.2) profiles so that they exert a tension on the canvas (30).

7. The tank according to claim 6, wherein the securing means (38) include at least one screw (40) mounted into a first bore (42) of the first profile, said screw being translationally free mounted in said first bore (42) and cooperating with an internal thread formed in the second profile (39.2) or with a nut disposed opposite to the first profile (39.1) relative to the second profile (39.2).

8. The tank according to claim 6, wherein the securing means include a plurality of screws (40) mounted in first bores (42) of the first profile (39.1), mounted translationally free in said first bores (42) distributed in the direction of the longitudinal axis (X), each of the screws (40) cooperating with an internal thread formed in the second profile (39.2) or with a nut disposed opposite to the first profile relative to the second profile (39.2).

9. The tank according to claim 6, wherein the holding means include at least one staple (50), advantageously several staples, overlapping the first and second profiles (39.1, 39.2).

10. A hydrogen storage tank including a tank according to one of claims 1 to 9, and hydrogen storage material (6) disposed in the compartments (8).
